# EUROPÄISCHE PATENTSCHRIFT

(11) **EP 3 927 530 B1**
(45) Veröffentlichungstag und Bekanntmachung des Hinweises auf die Patenterteilung: **04.06.2025**
(21) Anmeldenummer: 19832868.4
(22) Anmeldetag: 16.12.2019
(51) Int. Cl.: B29C 73/16, B60C 19/12, B60C 1/00, B29C 73/20

(54) **SELBSTTÄTIG ABDICHTENDES REIFENDICHTMITTEL UND FAHRZEUGLUFTREIFEN ENTHALTEND DAS REIFENDICHTMITTEL**
AUTOMATICALLY SEALING TIRE SEALANT AND PNEUMATIC VEHICLE TIRE CONTAINING THE TIRE SEALANT
AGENT D'ÉTANCHÉITÉ POUR PNEUMATIQUE À ÉTANCHÉITÉ AUTOMATIQUE ET PNEUMATIQUE DE VÉHICULE CONTENANT L'AGENT D'ÉTANCHÉITÉ POUR PNEUMATIQUE

(30) Priorität: 22.02.2019 DE 102019202441
(43) Veröffentlichungstag der Anmeldung: 29.12.2021
(73) Patentinhaber: Continental Reifen Deutschland GmbH, 30175 Hannover (DE)
(72) Erfinder: DOROSHENKO, Mikheil, 30419 Hannover (DE); TIM KEE, Sherry-Ann, 30419 Hannover (DE)
(74) Vertreter: Continental Corporation
(86) Internationale Anmeldenummer: PCT/EP2019/085254
(87) Internationale Veröffentlichungsnummer: WO 2020/169234

(56) Entgegenhaltungen:
- EP-A1- 3 308 984
- WO-A1-2018/141454
- US-A- 4 895 610

## Beschreibung

Die Erfindung betrifft ein selbsttätig abdichtendes Reifendichtmittel und einen Fahrzeugluftreifen enthaltend das Reifendichtmittel.

Selbstdichtend ausgestaltete Fahrzeugluftreifen sind beispielsweise aus der DE 10 2006 059 286 A1 der Anmelderin bekannt. Hierbei werden Reifen-Standardkonstruktionen nachträglich mit einer Dichtmittellage versehen. Das selbsttätig abdichtende Dichtmittel ist eine selbsthaftende, viskose Dichtmasse, welche von radial innen im Projektionsbereich des Gürtelpakets auf die radial innerste Reifenlage, die weitgehend luftdicht ausgeführte Innenschicht, als Lage aufgetragen wird. Die Dichtmittelschicht ist in der Lage, Einstiche von bis zu fünf Millimetern Durchmesser selbständig abzudichten. Nach einem Durchstich durch den Laufstreifen bis durch die Innenschicht umschließt das Dichtmittel den eingedrungenen Fremdkörper vollständig, dichtet den Innenraum gegenüber der Umgebung ab und verhindert so einen Druckluftverlust des Reifens. Der Fahrer des Fahrzeuges ist nicht gezwungen, den defekten Reifen sofort durch ein vollwertiges Ersatzrad oder ein Notrad zu ersetzen.

Das Dichtmittel zeichnet sich durch Luftdichtigkeit, starke Klebrigkeit und ausgewogenes Fließverhalten aus, wobei das Eigenschaftsprofil für die Anwendung in PKW-Fahrzeugluftreifen mit einem Innendruck von 2 bis 2,5 bar ausgelegt ist.

Aus dem Dokument US 4 895 610 A ist ein selbstdichtendes Reifendichtmittel bekannt, das ein Polyolefin, einen Kautschuk und einen Vernetzer enthält.

Der vorliegenden Erfindung liegt die Aufgabe zugrunde, ausgehend vom Stand der Technik ein selbsttätig abdichtendes Reifendichtmittel bereitzustellen, welches für Reifen mit einem hohen Innendruck, insbesondere 3,5 bar und mehr, geeignet ist.

Das Dichtmittel soll hierzu ein optimales Eigenschaftsbild aus Viskosität, Fließverhalten und Elastizität sowie Klebrigkeit aufweisen.

Gelöst wird diese Aufgabe dadurch, dass das Dichtmittel wenigstens folgende Bestandteile enthält:
- 10 bis 30 Gew.-% wenigstes eines Polyolefins und
- 35 bis 60 Gew.-% wenigstens eines Kautschuks und
- 1,0 bis 3,0 Gew.-% wenigstens eines Vernetzers, wobei der Vernetzer ausgewählt ist aus der Gruppe bestehend aus Polymethylolharz und Divinylbenzol und Chinonen, wobei das Chinon bevorzugt ein Chinondioxim ist, und
- 1,8 bis 5,0 Gew.-% wenigstens eines Vernetzungsinitiators, wobei der Vernetzungsinitiator Bleioxid oder ein anderes Metalloxid oder eine peroxidische Verbindung ist, wobei die peroxidische Verbindung bevorzugt ausgewählt ist aus der Gruppe bestehend aus Diaroylperoxiden, Diacylperoxiden und Peroxyestem.

Durch die Kombination der Bestandteile in den angegebenen Mengen weist das Dichtmittel ein optimales Fließverhalten, eine optimale Viskosität und Elastizität, und eine optimale Klebrigkeit auf. Aufgrund des Eigenschaftsprofils wird sichergestellt, dass das Dichtmittel bei Anwendungen in Reifen mit einem Innendruck von 3,5 bar und mehr weiterhin abdichtet und gleichzeitig aber nicht aus der Einstichstelle fließt. Dabei weist das Dichtmittel insbesondere aufgrund der im Vergleich zum Stand der Technik erhöhten Mengen an Vernetzer und Vernetzungsinitiator und Kautschuk und einer geringeren Menge an Polyolefin eine erhöhte Viskosität auf.

Mit der vorliegenden Erfindung ist es somit möglich, auch Reifen mit einem hohen Innendruck selbstdichtend auszugestalten.

Die Angaben in Gew.-% beziehen sich jeweils auf die Gesamtmenge an Dichtmittel. Die Begriffe "Dichtmittel" und "Reifendichtmittel" werden im Rahmen der vorliegenden Erfindung synonym verwendet und betreffen selbstabdichtende (selbsttätig abdichtende) Dichtmittelzusammensetzungen, sofern nicht ausdrücklich etwas anderes beschrieben ist.

Das erfindungsgemäße Reifendichtmittel kann durch im Stand der Technik bekannte Verfahren hergestellt werden.

Ein weiterer Gegenstand der vorliegenden Erfindung ist ein Fahrzeugluftreifen, der das erfindungsgemäße Reifendichtmittel inklusive aller genannten Ausführungen wenigstens auf der dem Laufstreifen gegenüberliegenden Innenfläche aufweist.

Der erfindungsgemäße Fahrzeugluftreifen ist insbesondere so ausgelegt, dass er bei einem Innendruck von 3,5 bar oder mehr betrieben wird. Hierbei kann es sich um alle Reifentypen handeln, die mit einem derartigen Innendruck betrieben werden, wie insbesondere Van-Reifen, LKW-Reifen, Industriereifen.

Im Folgenden werden die Bestandteile des erfindungsgemäßen Dichtmittels näher erläutert.

Gemäß vorliegender Erfindung enthält das selbsttätig abdichtende Reifendichtmittel 10 bis 30 Gew.-% wenigstens eines Polyolefins. Bevorzugt beträgt die Menge des wenigstens einen Polyolefins 15 bis 30 Gew.-%, beispielsweise 25 Gew.-%.

Mit einer Menge von 10 bis 30 Gew.-%, bevorzugt 15 bis 30 Gew.-%, wird ein optimales Fließverhalten, insbesondere eine optimale Viskosität, bei einer gleichzeitig guten Herstellbarkeit (Prozessierbarkeit) und Klebrigkeit des Dichtmittels erzielt.

Das wenigstens eine Polyolefin weist bevorzugt ein Zahlenmittel der Molekulargewichtsverteilung Mn gemäß GPC von 400 bis 2500 g/mol, besonders bevorzugt 800 bis 2500 g/mol, ganz besonders bevorzugt 800 bis 1600 g/mol, wiederum bevorzugt 1200 bis 1600 g/mol, wiederum besonders bevorzugt 1200 bis 1400 g/mol, beispielsweise 1300 g/mol, auf.

Ein Polyolefin mit den genannten Bereichen für das Mn ist besonders geeignet, um die gewünschte Fließfähigkeit bei gleichzeitiger Abdichtwirkung des Dichtmittels im Pannenfall zu erzeugen.

Hierbei ist es besonders bevorzugt, dass das wenigstens eine Polyolefin wenigstens ein Polybuten ist.

Dieses stellt die Klebrigkeit des fertigen Dichtmittels ein und bestimmt die Fließfähigkeit im Produktionsprozess sowie die lokale Ortsfestigkeit des fertigen Dichtmittels.

Es kann sich auch um ein Gemisch zweier oder mehrerer Polybutene mit jeweils einem Mn von 400 bis 2500 g/mol handeln, wobei sich die Polybutene im Mn unterscheiden können.

Geeignete Polybutene, auch Polyisobutene genannt, sind beispielsweise unter den Handelsnamen Indopol^{®} Polybutene der Firma INEOS Capital Limited erhältlich. Es ist auch ein Gemisch wenigstens eines Polybutens mit wenigstens einem weiteren Polyolefin denkbar.

Gemäß einer besonders vorteilhaften Weiterbildung der Erfindung weist das wenigstens eine Polyolefin einen Chlorgehalt von kleiner oder gleich 5 mg/kg, bevorzugt kleiner oder gleich 3 mg/kg, auf. Die Angabe bezieht sich auf mg Chlor pro einem kg des Polyolefins. In einer bevorzugten Ausführungsform der Erfindung enthält das selbsttätig abdichtende Reifendichtmittel wenigstens ein Polyolefin mit einem Chlorgehalt von kleiner oder gleich 1,5 mg/kg, besonders bevorzugt kleiner als 1 mg/kg. Bevorzugt ist das Polyolefin hierbei ein Polybuten.

Gemäß einer besonders bevorzugten Ausführungsform der Erfindung enthält das Dichtmittel somit wenigstens ein Polybuten mit einem Chlorgehalt von kleiner oder gleich 5 mg/kg, bevorzugt kleiner oder gleich 3 mg/kg, besonders bevorzugt kleiner als 1 mg/kg. Geeignete Polybutene, auch Polyisobutene genannt, sind beispielsweise unter den Handelsnamen Glissopal^{®} der Firma BASF bekannt. Insbesondere geeignet sind hierbei Glissopal^{®} V-500, V-640 oder V-190.

Gemäß vorliegender Erfindung enthält das selbsttätig abdichtende Reifendichtmittel 35 bis 60 Gew.-% wenigstens eines Kautschuks. Bevorzugt beträgt die Menge des wenigstens einen Kautschuks 40 bis 60 Gew.-%, besonders bevorzugt 50 bis 55 Gew.-%, beispielsweise 52 Gew.-%, bezogen auf die Gesamtmenge an Dichtmittel.

Bei dem Kautschuk handelt es sich hier um Rohkautschuk, sodass das unvernetzte Dichtmittel sowohl devulkanisierten Kautschuk aus recycelten Kautschukresten als auch unvulkanisierten Kautschuk enthalten kann.

Bei dem Kautschuk kann es sich um alle dem Fachmann bekannten Kautschuktypen handeln. Es ist auch ein Gemisch verschiedener Kautschuke denkbar.

Gemäß einer bevorzugten Ausführungsform der Erfindung handelt es sich bei dem Kautschuk in Verfahrensschritt a) um Naturkautschuk (NR) und/oder Butadien-Kautschuk (BR) und/oder Isopren-Kautschuk (IR) und/oder Styrol-Butadien-Kautschuk (SBR) und/oder Polychloropren (CR) und/oder Butylkautschuk (IIR) und/oder Brombutylkautschuk (BIIR) und/oder Chlorbutylkautschuk (CIIR). Diese Kautschuktypen sind für die Verarbeitungstemperaturen bei der Herstellung des Reifendichtmittels und später bei der Anwendung im Reifen besonders gut geeignet.

Besonders bevorzugt wird wenigstens Butylkautschuk (IIR) verwendet. Butylkautschuk eignet sich besonders gut, da er eine vergleichsweise hohe Luftdichtigkeit aufweist.

Dem Fachmann ist klar, dass sämtliche genannten Bestandteile im vernetzten Dichtmittel zumindest teilweise in chemisch veränderter Form, insbesondere als Derivate, vorliegen.

Insbesondere durch die Kombination eines Vernetzers mit einem Vernetzungsinitiator in den angegebenen erfindungsgemäßen Mengen wird ein besonders wirksames, im Pannenfall schnell abdichtendes Reifendichtmittel erhalten, welches für Reifen mit einem hohen Innendruck optimiert ist.

Gemäß vorliegender Erfindung enthält das selbsttätig abdichtende Reifendichtmittel 1,0 bis 3,0 Gew.-% wenigstens eines Vernetzers. Die Menge des wenigstens einen Vernetzers beträgt bevorzugt 1,5 bis 3,0 Gew.-%, besonders bevorzugt 1,5 bis 2,5 Gew.-%, bezogen auf die Gesamtmenge an Dichtmittel.

Gemäß der Erfindung ist der Vernetzer ausgewählt ist aus der Gruppe bestehend aus, Polymethylolharz und Divinylbenzol und Chinonen. Das Chinon ist bevorzugt ein Chinondioxim, beispielsweise Dibenzoylchinondioxim oder para-Benzochinondioxim. Besonders bevorzugt ist para-Benzochinondioxim.

Mit den bevorzugten und besonders bevorzugten Vernetzern wird eine extrem schnelle Vernetzung bei relativ niedrigen Temperaturen erzielt. Dies ermöglicht bei der Herstellung des Dichtmittels, dass es schnell nach dem Aufbringen des Materials in den Reifen ortsfest wird.

Gemäß vorliegender Erfindung enthält das selbsttätig abdichtende Reifendichtmittel 1,8 bis 5,0 Gew.-% wenigstens eines Vernetzungsinitiators.

Die Menge des wenigstens einen Vernetzungsinitiators beträgt bevorzugt 2,0 bis 4,0 Gew.-%, besonders bevorzugt 2,5 bis 3,5 Gew.-%, bezogen auf die Gesamtmenge an Dichtmittel.

Der Vernetzungsinitiator ist eine chemische Verbindung, welche die Vernetzung des Dichtmittels initiiert. Bei dem Vernetzungsinitiator handelt sich um Bleioxid oder andere Metalloxide oder eine peroxidische Verbindung.

Eine peroxidische Verbindung ist eine chemische Verbindung, die wenigstens eine Peroxid-Einheit, also -O-O- enthält (wobei O = Sauerstoff). Es können auch mehrere Peroxide eingesetzt werden. Das oder die Peroxid(e) sind bevorzugt ausgewählt aus der Gruppe bestehend aus Diaroylperoxiden, Diacylperoxiden und Peroxyestern. Der Vernetzungsinitiator kann als reine Substanz oder in einem Gemisch mit beispielsweise einem Stabilisator zugegeben werden. Im Falle eines Gemisches, beispielsweise von 50 Gew.-% Dibenzoylperoxid und 50 Gew.-% Dibutylmaleat als Stabilisator, geht nur die Menge des enthaltenen Peroxides in die Menge an Vernetzungsinitiator mit ein, d. h. z. B., dass in den oben genannten Mengen wenigstens eines Vernetzungsinitiators Begleitsubstanzen wie Dibutylmaleat nicht eingerechnet sind.

Das Dichtmittel kann ferner weitere Bestandteile enthalten, wie insbesondere Füllstoffe, Klebrigmacher, Weichmacher, wie z. B. Öl(e), sowie gegebenenfalls weitere Zusatzstoffe, wie z. B. Farbpigmente und/oder Zinkoxid und/oder Schwefel.

Bei dem Weichmacher kann es sich um alle dem Fachmann bekannten Weichmacher, insbesondere Öle, handeln, wie insbesondere aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346. Mineralöle sind als Weichmacher besonders bevorzugt.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß einer bevorzugten Ausführungsform der Erfindung enthält das Dichtmittel zudem wenigstens einen Füllstoff, insbesondere wenigstens einen aktiven Füllstoff.

Bei dem Füllstoff kann es sich um alle dem Fachmann bekannten Füllstoffe handeln, wie insbesondere verstärkende Füllstoffe, wie Ruß und/oder Kieselsäure, wobei insbesondere gefällte Kieselsäuren gemeint und bevorzugt sind, die als Füllstoffe für Reifenkautschukmischungen bekannt sind.

Weiterhin kann das Dichtmittel magnetische Füllstoffe enthalten, wie ferromagnetische Metalle, wie beispielsweise Eisen, Nickel, Cobalt, Strontium, Barium und Gadolinium, und/oder deren Verbindungen, wie insbesondere Eisenverbindungen, insbesondere Eisenoxide, wie beispielsweise Magnetit (Fe₃O₄) oder Ferrite.

Ferner sind weitere verstärkende und nicht verstärkende Füllstoffe, insbesondere Siliziumoxid basierte Füllstoffe, wie Silikate oder Sand oder Glaskugeln, denkbar sowie ggf. verstärkende Füllstoffe wie z.B. Graphit und Graphene und sogenannte "carbon-silica dual-phase filler", sowie Mikrosphären oder Plastikpartikel oder wiederaufbereitete Reste von Schaumstoffen.

Als "Ruße" sind sowohl Industrieruße aus auch Pyrolyse-Ruße umfasst.

Gemäß einer bevorzugten Ausführungsform der Erfindung umfasst der Füllstoff wenigstens einen Industrieruß. Dies hat den Vorteil, dass die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Als Ruße sind im Rahmen der vorliegenden Erfindung prinzipiell alle dem Fachmann bekannten Ruß-Typen denkbar.

Gemäß einer vorteilhaften Ausführungsform der Erfindung wird ein Ruß eingesetzt, der eine Jodadsorptionszahl gemäß ASTM D 1510 von 20 bis 180 g/kg, besonders bevorzugt 30 bis 140 g/kg, und eine DBP-Zahl gemäß ASTM D 2414 von 30 bis 200 ml/100 g, bevorzugt 90 bis 180 ml/100g, besonders bevorzugt 110 bis 180 ml/100g, aufweist.

Gemäß einer weiteren bevorzugten Ausführungsform der Erfindung wird ein Ruß des Typs N326 verwendet.

Es ist auch ein Gemisch von zwei oder mehreren Rußen denkbar.

Gemäß einer weiteren bevorzugten Ausführungsform der Erfindung umfasst der Füllstoff wenigstens eine Kieselsäure (engl. "silica").

Hierdurch wird eine optimale Verstärkung des Dichtmittels erzielt und eine gute Viskositätskontrolle und -einstellung ermöglicht. Zudem wird mit wenigstens einer Kieselsäure die Kohäsion des Dichtmittels erhöht und die Klebrigkeit des Dichtmittels während des Herstellverfahrens erniedrigt wird. Gleichzeitig werden die Ortsfestigkeit und die Reißeigenschaften des Dichtmittels verbessert.

Es ist auch ein Gemisch von zwei oder mehreren Kieselsäuren denkbar.

Bei den Kieselsäuren kann es sich um die dem Fachmann bekannten Kieselsäuren, die als Füllstoff für Reifenkautschukmischungen geeignet sind, handeln. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay) verwendet werden.

Ferner ist ein Gemisch der genannten Füllstoffe denkbar und bevorzugt, wie insbesondere wenigstens ein Industrieruß in Kombination mit wenigstens einer Kieselsäure, wobei sich ebenfalls die genannten Vorteile ergeben.

Die Menge des wenigstens einen Füllstoffs beträgt gemäß einer vorteilhaften Ausführungsform der Erfindung 0,1 bis 20 Gew.-%, bevorzugt 2 bis 12 Gew.-%, beispielsweise 5 bis 10 Gew.-%, bezogen auf die Gesamtmenge an Dichtmittel.

Das Dichtmittel enthält gemäß einer besonders vorteilhaften Ausführungsform der Erfindung 2,0 bis 20, bevorzugt 2 bis 12 Gew.-%, wenigstens eines Füllstoffs, welcher ausgewählt ist aus Rußen, Kieselsäuren und magnetischen Partikeln, wobei Ruße Industrieruße und Pyrolyse-Ruße umfassen.

Durch Füllstoffe wie Ruße und/oder Kieselsäuren wird das Dichtmittel verstärkt, insbesondere bei geringen Dehnungen. Ferner weist es eine hohe Temperaturstabilität des Netzwerkes auf.

Durch magnetische Partikel ist es möglich, das Fließverhalten an metallischen Einstichobjekten, wie insbesondere Eisennägeln, zu optimieren.

Gemäß einer weiteren Ausführungsform der Erfindung ist kein Füllstoff, d. h. 0 Gew.-% Füllstoff enthalten.

Das Dichtmittel enthält gemäß vorteilhafter Ausführungsformen wenigstens einen Klebrigmacher, und zwar insbesondere für den Fall, dass das Dichtmittel nicht bereits aufgrund der enthaltenen Bestandteile, insbesondere der Polymere eine ausreichende Klebrigkeit aufweist. Unter "Klebrigmacher" wird prinzipiell jede Substanz verstanden, die die Klebrigkeit des Dichtmittels erhöht.

Die Menge des wenigstens einen Klebrigmachers beträgt bevorzugt 2,0 bis 20 Gew.-% bezogen auf die Gesamtmenge an Dichtmittel.

Gemäß vorteilhafter Ausführungsformen der Erfindung handelt es sich bei dem Klebrigmacher um wenigstens ein Kohlenwasserstoffharz.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist.

Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können.

Das Kohlenwasserstoffharz kann ein Homopolymer oder ein Copolymer sein. Unter Homopolymer wird in der vorliegenden Anmeldung ein Polymer verstanden, welches gemäß Römpp Online (Auszug vom 02.01.2017, letzte Aktualisierung des Artikels August 2008) "aus Monomeren nur einer Art entstanden ist".

Unter Copolymer wird im Rahmen der vorliegenden Erfindung ein Polymer verstanden, welches aus mehreren, d.h. zwei oder mehr, verschiedenen Monomeren aufgebaut ist. Im Rahmen der vorliegenden Erfindung kann das Kohlenwasserstoffharz daher z.B. auch ein Copolymer aus drei verschiedenen Monomeren sein.

Bei den Monomeren kann es sich um alle dem Fachmann bekannten Monomere von Kohlenwasserstoffharzen handeln, wie aliphatische Monomere, insbesondere aliphatische C₅-Monomere, weitere ungesättigte Verbindungen, die kationisch polymerisiert werden können, enthaltend Aromaten und/oder Terpene und/oder Alkene und/oder Cycloalkene.

Bevorzugte Monomere sind insbesondere C₅ und C₉-Monomere.

Bei den Aromaten (aromatische Monomere) kann es sich beispielsweise um alpha-Methylstyrol und/oder Styrol und/oder Vinyltoluol und/oder Inden und/oder Cumaron und/oder Methylinden und/oder Methylcumaron und/oder Phenol handeln. Bevorzugt handelt es sich bei den aromatischen Monomeren um alpha-Methylstyrol und/oder Styrol und/oder Vinyltoluol und/oder Inden und/oder Cumaron und/oder Methylinden und/oder Methylcumaron.

Gemäß Römpp Online ist der Begriff "Olefine" die "Gruppenbezeichnung für acyclische und cyclische aliphatische Kohlenwasserstoffe mit einer oder mehreren reaktiven C=C-Doppelbindungen im Molekül, die heute besser als Alkene bzw. Cycloalkene bezeichnet werden, in weiterem Sinne auch Bezeichnung für deren substituierte Derivate...." Im Rahmen der vorliegenden Erfindung werden daher ungesättigte Terpene, Alkene und Cycloalkene unter den Oberbegriff Olefine zusammengefasst.

Bei den Alkenen kann es sich beispielsweise um 1-Buten und/oder 2-Buten und/oder Butadien handeln.

Gemäß einer bevorzugten Ausführungsform der Erfindung handelt es sich bei dem Kohlenwasserstoffharz um wenigstens ein aliphatisches Harz, also ein Harz welches keine aromatischen Ringsysteme enthält. Ein derartiges Harz besteht zu 100 Gew.-% aus aliphatischen Monomeren bzw. dessen Derivaten.

Gemäß einer weiteren Ausführungsform der Erfindung besteht das Harz zu 10 bis 99 Gew.-%, bevorzugt 50 bis 99 Gew.-%, besonders bevorzugt 70 bis 99 Gew.-%, aus aliphatischen und zu 1 bis 90 Gew.-%, bevorzugt 1 bis 50 Gew.-%, besonders bevorzugt 1 bis 30 Gew.-% aus aromatischen Monomeren.

Gemäß einer bevorzugten Ausführungsform der Erfindung handelt es sich bei dem Kohlenwasserstoffharz um wenigstens ein Harz, welches wenigstens aus C₅-Monomeren aufgebaut ist und dem Fachmann als sogenanntes C₅-Harz bekannt ist. Hiermit werden besonders gute Eigenschaften des Dichtmittels, insbesondere ein optimiertes Fließverhalten bei gleichzeitig guter Klebrigkeit, erzielt.

Bei den aliphatischen C₅-Monomeren kann es sich um Monomere der C₅-Erdölfraktion, z.B. Isopren, und/oder Monomere der Terpene und/oder Cycloolefine und/oder Olefine, wie z.B. Penten, handeln. Unter C₅ ist zu verstehen, dass diese Monomere aus fünf Kohlenstoffatomen aufgebaut sind.

Ferner ist dem Fachmann bekannt, dass die C₅-Erdölfraktion außer aliphatischen Monomeren mit fünf Kohlenstoffatomen andere aliphatische Monomere (Bausteine) mit z.B. vier, also C₄-Monomere, oder sechs Kohlenstoffatomen, C₆-Monomere, enthalten kann.

Gemäß vorteilhafter Ausführungsformen der Erfindung enthält das Dichtmittel 2 bis 20 Gew.-% wenigstens eines Kohlenwasserstoffharzes als Klebrigmacher. Bevorzugt beträgt die Menge des wenigstens einen Kohlenwasserstoffharzes 2 bis 10 Gew.-%, besonders bevorzugt 3,5 bis 7 Gew.-%.

Mit derartigen bevorzugten und besonders bevorzugten Mengen werden die Klebrigkeit und die Viskosität des Dichtmittels weiter optimiert.

Gemäß vorteilhafter und beispielhafter Ausführungsformen der Erfindung enthält das Dichtmittel folgende Bestandteile in folgenden Mengen:
- 10 bis 30 Gew.-% wenigstes eines Polyolefins, bevorzugt wenigstens eines Polybutens, und
- 2,0 bis 20 Gew.-% wenigstens eines Klebrigmachers und
- 35 bis 60 Gew.-% wenigstens eines Kautschuks und
- 2,0 bis 12 Gew.-% wenigstens eines Füllstoffs und
- 1,0 bis 3,0 Gew.-% wenigstens eines Vernetzers und
- 1,8 bis 5,0 Gew.-% wenigstens eines Vernetzungsinitiators.

Die Angaben in Gew.-% beziehen sich jeweils auf die Gesamtmenge an Dichtmittel.

Das erfindungsgemäße Reifendichtmittel kann durch im Stand der Technik bekannte Verfahren aus einer oder mehreren Komponenten hergestellt werden. Die Durchmischung erfolgt bevorzugt in einem Extruder, bevorzugt einem Doppelschneckenextruder.

Mögliche Verfahrensschritte und Vorrichtungen sind beispielsweise in der WO 2008/141848 offenbart.

Ein weiterer Gegenstand der vorliegenden Erfindung ist ein Fahrzeugluftreifen, der das erfindungsgemäße Reifendichtmittel inklusive aller genannten Ausführungen wenigstens auf der dem Laufstreifen gegenüberliegenden Innenfläche aufweist.

Dabei beträgt die Schichtdicke in radialer Richtung von 2 bis 8 mm, besonders bevorzugt 3 bis 7 mm, ganz besonders bevorzugt 4 bis 5 mm.

Die Schichtdicke wird dabei in radialer Richtung senkrecht zur axialen Richtung gemessen.

Mit den genannten Schichtdicken wird eine optimale Balance aus Dichtwirkung und gleichzeitig aber nicht zu hohem Materialverbrauch und Reifengewicht erzielt, was wiederum ökologische Vorteile hat.

Das Dichtmittel besteht beispielsweise aus folgenden Substanzen:
52 Gew.-% Butylkautschuk,
25 Gew.-% Polybuten mit einem Mn von 1300 g/mol,
5,0 Gew.-% aliphatisches Kohlenwasserstoffharz (C₅-Harz),
7,0 Gew.-% Ruß N326 als Füllstoff,
2,0 Gew.-% Vernetzer
3,0 Gew.-% Vernetzungsinitiator + 3,0 Gew.-% Dibutylmaleat als Stabilisator
3,0 Gew.-% Mineralölweichmacher.

## Patentansprüche

1. Selbsttätig abdichtendes Reifendichtmittel, **dadurch gekennzeichnet, dass** wenigstens folgende Bestandteile enthält:
- 10 bis 30 Gew.-% wenigstes eines Polyolefins und
- 35 bis 60 Gew.-% wenigstens eines Kautschuks und
- 1,0 bis 3,0 Gew.-% wenigstens eines Vernetzers, wobei der Vernetzer ausgewählt ist aus der Gruppe bestehend aus Polymethylolharz und Divinylbenzol und Chinonen, wobei das Chinon bevorzugt ein Chinondioxim ist, und
- 1,8 bis 5,0 Gew.-% wenigstens eines Vernetzungsinitiators, wobei der Vernetzungsinitiator Bleioxid oder ein anderes Metalloxid oder eine peroxidische Verbindung ist, wobei die peroxidische Verbindung bevorzugt ausgewählt ist aus der Gruppe bestehend aus Diaroylperoxiden, Diacylperoxiden und Peroxyestern.

2. Reifendichtmittel nach Anspruch 1, **dadurch gekennzeichnet, dass** es 2,0 bis 20 Gew.-%, bevorzugt 2,0 bis 12 Gew.-%, wenigstens eines Füllstoffs enthält.

3. Reifendichtmittel nach Anspruch 2, **dadurch gekennzeichnet, dass** der Füllstoff ausgewählt ist aus Rußen, Kieselsäuren und magnetischen Partikeln, wobei Ruße Industrieruße und Pyrolyse-Ruße umfassen.

4. Reifendichtmittel nach einem der vorherigen Ansprüche, **dadurch gekennzeichnet, dass** es 2,0 bis 20 Gew.-% wenigstens eines Klebrigmachers enthält.

5. Reifendichtmittel nach Anspruch 4, **dadurch gekennzeichnet, dass** der Klebrigmacher wenigstens ein Kohlenwasserstoffharz umfasst.

6. Reifendichtmittel nach einem der vorherigen Ansprüche, **dadurch gekennzeichnet, dass** es 1,5 bis 3,0 Gew.-%, wenigstens eines Vernetzers enthält.

7. Reifendichtmittel nach einem der vorherigen Ansprüche, **dadurch gekennzeichnet, dass** es 2,0 bis 4,0 wenigstens eines Vernetzungsinitiators enthält.

8. Fahrzeugluftreifen, der das Reifendichtmittel nach einem der Ansprüche 1 bis 7 wenigstens auf der dem Laufstreifen gegenüberliegenden Innenfläche aufweist.

## Claims

1. Self-sealing tyre sealant, **characterized in that** it contains at least the following constituents:
- 10% to 30% by weight of at least one polyolefin and
- 35% to 60% by weight of at least one rubber and
- 1.0% to 3.0% by weight of at least one crosslinker, wherein the crosslinker is selected from the group consisting of polymethylol resin and divinylbenzene and quinones, wherein the quinone is preferably a quinone dioxime, and
- 1.8% to 5.0% by weight of at least one crosslinking initiator, wherein the crosslinking initiator is lead oxide or another metal oxide or a peroxidic compound, wherein the peroxidic compound is preferably selected from the group consisting of diaroyl peroxides, diacyl peroxides and peroxyesters.

2. Tyre sealant according to Claim 1, **characterized in that** it contains 2.0% to 20% by weight, preferably 2.0% to 12% by weight, of at least one filler.

3. Tyre sealant according to Claim 2, **characterized in that** the filler is selected from carbon blacks, silicas and magnetic particles, wherein the carbon blacks comprise industrial carbon blacks and pyrolysis carbon blacks.

4. Tyre sealant according to any of the preceding claims, **characterized in that** it contains 2.0% to 20% by weight of at least one tackifier.

5. Tyre sealant according to Claim 4, **characterized in that** the tackifier comprises at least one hydrocarbon resin.

6. Tyre sealant according to any of the preceding claims, **characterized in that** it contains 1.5% to 3.0% by weight of at least one crosslinker.

7. Tyre sealant according to any of the preceding claims, **characterized in that** it contains 2.0 to 4.0 phr of at least one crosslinking initiator.

8. Pneumatic vehicle tyre comprising the tyre sealant according to any of Claims 1 to 7 at least on the inner surface opposite the tread.

## Revendications

1. Agent d'étanchéité autonome pour pneumatique, **caractérisé en ce qu'**il contient au moins les constituants suivants :
- 10 à 30% en poids d'au moins une polyoléfine et
- 35 à 60% en poids d'au moins un caoutchouc et
- 1,0 à 3,0% en poids d'au moins un réticulant, le réticulant étant choisi dans le groupe constitué par une résine de polyméthylol et le divinylbenzène et les quinones, la quinone étant de préférence une quinone-dioxime et
- 1,8 à 5,0% en poids d'au moins un initiateur de réticulation, l'initiateur de réticulation étant de l'oxyde de plomb ou un autre oxyde métallique ou un composé peroxyde, le composé peroxyde étant de préférence choisi dans le groupe constitué par les peroxydes de diaroyle, les peroxydes de diacyle et les peroxyesters.

2. Agent d'étanchéité pour pneumatique selon la revendication 1, **caractérisé en ce qu'**il contient 2,0 à 20% en poids, de préférence 2,0 à 12% en poids d'au moins une charge.

3. Agent d'étanchéité pour pneumatique selon la revendication 2, **caractérisé en ce que** la charge est choisie parmi les suies, les silices et les particules magnétiques, les suies comprenant les suies industrielles et les suies de pyrolyse.

4. Agent d'étanchéité pour pneumatique selon l'une des revendications précédentes, **caractérisé en ce qu'**il contient 2,0 à 20% en poids d'au moins un agent poisseux.

5. Agent d'étanchéité pour pneumatique selon la revendication 4, **caractérisé en ce que** l'agent poisseux comprend au moins une résine hydrocarbonée.

6. Agent d'étanchéité selon l'une des revendications précédentes, **caractérisé en ce qu'**il contient 1,5 à 3,0% en poids d'au moins un réticulant.

7. Agent d'étanchéité pour pneumatique selon l'une des revendications précédentes, **caractérisé en ce qu'**il contient 2,0 à 4,0% en poids d'au moins un initiateur de réticulation.

8. Pneumatique de véhicule, qui présente l'agent d'étanchéité pour pneumatique selon l'une des revendications 1 à 7 au moins sur la face interne opposée à la bande de roulement.
